# FASCICULE DE BREVET EUROPEEN

(11) **EP 1 253 077 B1**
(45) Date de publication et mention de la délivrance du brevet: **24.08.2005**
(21) Numéro de dépôt: 02290892.5
(22) Date de dépôt: 10.04.2002
(51) Int. Cl.: B64D 37/32, A62C 3/06

(54) **Procédé et dispositif d'inertage d'un réservoir de carburant d'aéronef**
Verfahren und Vorrichtung zur Inertisierung eines Flugzeugbrennstofftanks
Method and device for inerting an aircraft fuel tank

(30) Priorité: 26.04.2001 FR 0105631
(43) Date de publication de la demande: 30.10.2002
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: Schmutz, Nicolas, 38000 Grenoble (FR); Vandroux, Olivier, 38100 Grenoble (FR)
(74) Mandataire: Le Moenner, Gabriel

(56) Documents cités:
- EP-A- 0 405 597
- WO-A-00/00389
- GB-A- 1 395 691
- US-A- 4 386 945
- DORNHEIM M A: "AIRLINE INDUSTRY TAKES FRESH LOOK AT INERTING" AVIATION WEEK AND SPACE TECHNOLOGY, MCGRAW-HILL INC. NEW YORK, US, vol. 147, no. 2, 14 juillet 1997 (1997-07-14), pages 60-61, XP000699956 ISSN: 0005-2175

## Description

La présente invention concerne un procédé d'inertage d'un réservoir de carburant d'aéronef.

L'invention vise tout type d'aéronefs, en particulier des avions et des hélicoptères. Elle s'applique à tout type de vols, que ce soit civil ou militaire.

Lors du vol d'un aéronef, il existe un risque permanent d'inflammation des vapeurs de carburant. L'occurrence de cette inflammation peut être réduite, en injectant dans le réservoir un gaz inerte, permettant d'abaisser le pourcentage d'oxygène qui y est présent, au-dessous d'une valeur déterminée. Une fois cette dernière atteinte, le mélange présent dans le réservoir n'est sensiblement plus explosif. Un tel procédé est, par exemple, décrit dans WO-A-99/34 106.

Il est également connu de produire, à bord de l'aéronef, un air enrichi en azote ou, en d'autres termes, appauvri en oxygène. Une telle production est mise en oeuvre par l'intermédiaire d'un appareil faisant appel à des membranes perméables, ou bien à des tamis moléculaires. Cet appareil, qui est mis en communication avec une source d'air comprimé interne à l'avion, permet de fournir, d'une part, une fraction d'air de sortie enrichi en oxygène et, d'autre part, une fraction d'air de sortie enrichi en gaz inerte, notamment en azote. Cette dernière fraction est injectée à l'intérieur du réservoir, afin d'en assurer l'inertage.

Cette solution connue présente cependant certains inconvénients. En effet, pour disposer d'une protection complète, l'inertage du réservoir doit intervenir pendant l'intégralité du vol. Ceci implique de réaliser des appareils de fourniture d'air enrichi en gaz inerte, dont la masse et l'encombrement sont importants, ce qui induit un alourdissement correspondant de l'aéronef. Par ailleurs, de tels appareils sont d'un coût élevé. Enfin, ils nécessitent une consommation d'air sous pression significative, ce qui provoque une baisse de puissance globale de l'aéronef, dans la mesure où cette consommation limite la propulsion de celui-ci.

Le Document WO-A-00/00389, au nom de la demanderesse, décrit un procédé et un dispositif d'inertage de réservoir de carburant d'aéronef avec fourniture de flux variables de mélanges gazeux enrichis en gaz inerte à des teneurs toujours supérieures à une valeur nominale de sécurité.

Le Document EP-A-0 405 597 décrit un agencement de perméateur comportant différents faisceaux de fibres utilisables partiellement ou en totalité pour fournir des débits variables de mélanges gazeux enrichis en azote et utilisables notamment pour l'inertage de réservoir de carburant d'aéronef.

L'invention se propose de mettre en oeuvre un procédé qui, tout en assurant un inertage fiable des vapeurs contenues dans le réservoir de carburant, fait appel à des éléments mécaniques, dont la taille et la masse sont réduites par rapport à l'art antérieur, et qui impliquent une consommation d'air comprimé plus faible que dans la technique connue.

A cet effet, elle a pour objet un procédé d'inertage selon la revendication 1.

L'invention permet de réaliser les objectifs précédemment mentionnés. Ainsi, si l'on désire conférer une protection complète à l'aéronef, il est nécessaire d'en inerter le réservoir pendant l'ensemble du vol, c'est-à-dire les phases de décollage et de montée, puis de croisière, et enfin de descente et d'atterrissage.

Or, la phase la plus contraignante, en termes de quantité de gaz à générer, s'avère être la descente. En effet, cette phase s'accompagne d'une hausse de la pression atmosphérique et, de ce fait, d'une augmentation correspondante de la masse de gaz contenu dans le volume occupé par la phase gazeuse, dans le réservoir. Il s'agit donc d'injecter une masse supplémentaire de gaz inerte, afin de compenser une telle augmentation. La descente constitue ainsi la phase déterminante, en vue du dimensionnement des appareils de génération d'air enrichi en gaz inerte.

L'invention prévoit de fournir, pendant la phase de croisière survenant en haute altitude, un air fortement enrichi en gaz inerte, à une teneur supérieure à la teneur théorique, pour laquelle les risques d'explosion sont absents.

Il convient de noter que cette mesure n'induit cependant aucun coût supplémentaire significatif. En effet, pendant cette phase de croisière, la quantité d'air enrichi à produire, est particulièrement faible, puisqu'elle ne correspond sensiblement qu'au remplacement du carburant consommé.

Selon l'invention, à la fin de la phase de croisière, les réservoirs de l'aéronef contiennent un air dont la teneur en gaz inerte est élevée ou, en d'autres termes, qui est particulièrement appauvri en oxygène. Dans ces conditions, il est alors envisageable d'injecter, pendant la descente, un air dont la teneur en gaz inerte est inférieure à la teneur théorique de sécurité, dont il est fait mention ci-dessus.

Cet air peu enrichi en gaz inerte, obtenu par dilution avec de l'air ambiant, sera alors mélangé avec l'air particulièrement enrichi, injecté primitivement dans le réservoir lors de la phase de croisière. On conçoit qu'une telle opération de mélange conduira à l'obtention d'un air, dont la teneur en gaz inerte sera voisine de la teneur de sécurité précitée.

A titre d'exemple, il est ainsi possible de fournir, pendant la phase de croisière, un air contenant environ 2% d'oxygène et, pendant la phase de descente, un air contenant 12% d'oxygène.

Le fait d'injecter, pendant la descente, un air dont la teneur en gaz inerte est relativement basse est particulièrement avantageux sur le plan économique. Ainsi, puisque cette phase de descente correspond à une demande maximale en gaz inerte, il est possible de conférer à l'appareil de génération d'air enrichi des dimensions sensiblement réduites par rapport à l'art antérieur.

Cette réduction de la taille des équipements permet ainsi d'en réduire la masse, ainsi que les coûts de fabrication. Par ailleurs, elle permet de diminuer la consommation en air, prélevé sur le circuit de l'aéronef, ce qui ne pénalise donc les performances de ce dernier que dans une faible mesure.

Selon d'autres caractéristiques de l'invention :
- le rapport entre le second débit et le premier débit est compris entre 2,5 et 5 ;
- la seconde teneur en gaz inerte est comprise entre 86 et 95% ;

L'invention va être décrite ci-dessous, en référence aux dessins annexés, donnés uniquement à titre d'exemple non limitatif, dans lesquels :
- la figure 1 est une vue schématique illustrant un dispositif d'inertage d'un carburant d'aéronef, conforme à l'invention et
- la figure 2 est une courbe illustrant les variations de la teneur, en gaz inerte, de l'air injecté dans le réservoir, en fonction de la phase du vol.

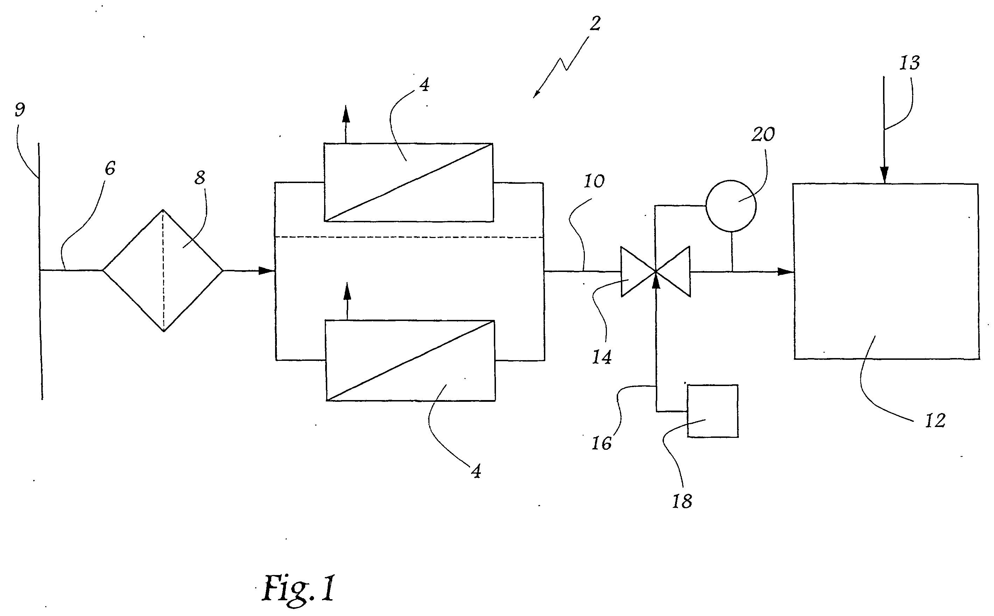

Le dispositif d'inertage, représenté sur la figure 1, comprend un appareil 2, susceptible de produire un air enrichi en gaz inerte, en particulier en azote. Cet appareil, qui est par exemple conforme à un de ceux commercialisés par la société L'AIR LIQUIDE, est muni de plusieurs membranes 4, disposées en parallèle, en faisant référence à l'écoulement du gaz qui y circule.

De façon classique, il est possible de faire varier la teneur en gaz inerte, délivré en sortie de cet appareil. A cet effet, certaines des membranes 4 peuvent être court-circuitées, en ce sens que l'air admis à l'entrée de cet appareil ne s'écoule pas au travers des membranes considérées. A titre de variante, il est également possible de restreindre le débit de gaz de sortie, afin d'en augmenter la teneur en azote.

Il est également possible de remplacer l'appareil à membranes 2 par un appareil à adsorption à variation de pression faisant appel à des tamis moléculaires. Dans cette hypothèse, celui-ci est par exemple conforme à un de ceux commercialisés par la société LITTON.

L'appareil 2 est mis en relation, par une ligne 6, pourvue d'un filtre 8, avec une source d'air comprimé 9, interne à un aéronef. Une telle source est par exemple formée par le circuit de conditionnement de cet aéronef, ou bien par un prélèvement moteur.

La sortie de l'appareil 2 comprend une ligne non représentée, à l'intérieur de laquelle circule de l'air enrichi en oxygène. Cette sortie comporte également une conduite 10, débouchant dans un réservoir 12 de l'aéronef, à l'intérieur de laquelle circule de l'air enrichi en azote. Une ligne 13, mise en communication avec l'extérieur, permet de diriger de l'air ambiant dans le réservoir 12.

La conduite 10 est équipée d'une vanne 14, susceptible de recevoir un signal de commande 16, depuis un organe de commande 18. Par ailleurs, un capteur 20, permettant de mesurer la teneur en oxygène circulant dans la conduite 10, est placé en aval de la vanne 14.

Le fonctionnement du dispositif, décrit ci-dessus, va être explicité dans ce qui suit.

Lors d'une phase considérée du vol de l'aéronef, la vanne 14 possède une valeur de consigne, permettant d'injecter, dans le réservoir 12, un air enrichi en gaz inerte, à une teneur déterminée. Ainsi, dans une phase de décollage et de montée de l'aéronef, l'air enrichi admis dans le réservoir 12, par la conduite 10, possède par exemple une teneur en oxygène de 2%. Lors d'un vol de croisière, à altitude sensiblement stationnaire, cette teneur en oxygène de l'air enrichi en gaz inerte est maintenue constante, à 2%.

Lors d'un changement de phase de vol, la consigne appliquée à la vanne 14 est modifiée. A cet effet, un signal 16, de commande de l'état de la vanne 14, est dirigé vers cette dernière à partir de l'organe de commande 18. Un tel signal peut par exemple être ordonné par le pilote, ou bien être lié aux taux de descente ou de montée de l'aéronef, ou bien encore être lié à des différences de pression existant entre le réservoir 12 et l'atmosphère.

Une fois que la vanne 14 a reçu ce signal 16, elle est automatiquement manoeuvrée, de façon à autoriser l'écoulement, dans la conduite 10, d'un air enrichi en azote, dont la teneur est conforme à la nouvelle consigne.

A cet égard, le capteur 20, qui est par exemple un analyseur d'oxygène, assure une régulation en boucle fermée de cette teneur en oxygène ou, en d'autres termes, en gaz inerte. A cet effet, ce capteur 20 transmet un ordre à la vanne 14, qui adapte en continu les différents paramètres des membranes 4, afin d'obtenir la teneur souhaitée en gaz inerte admis dans le réservoir 12.

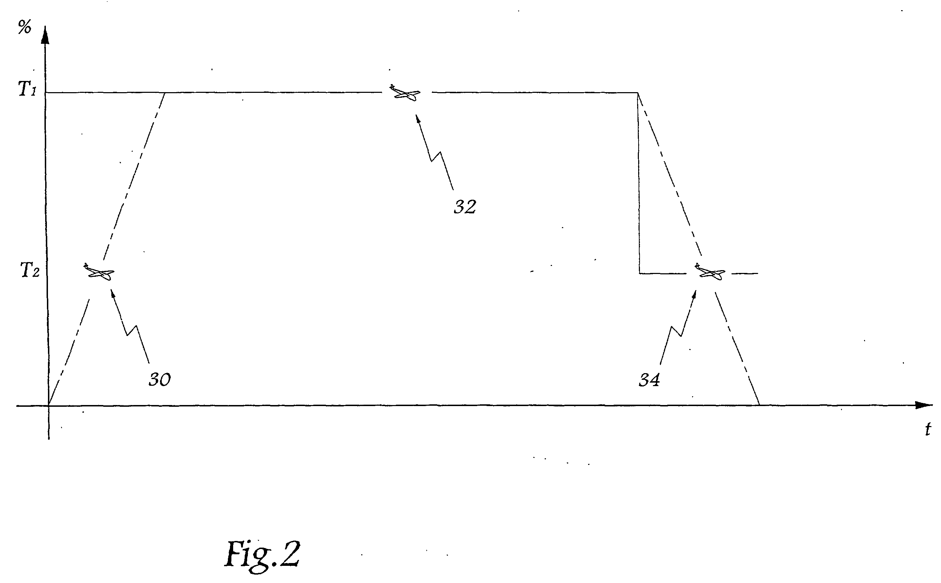

La figure 2 illustre les variations, en fonction de la phase du vol, de la teneur en gaz inerte, de l'air injecté dans le réservoir 12. Sur ce graphe sont illustrées, en traits pleins, les variations de la teneur en gaz inerte en fonction du temps et, en traits mixtes, les variations de l'altitude de l'aéronef en fonction du temps.

Durant la phase principale du vol, en d'autres termes la phase de croisière, la teneur en gaz inerte est maintenue à une valeur T₁ très élevée, correspondant à une fraction d'oxygène très faible, voisine de 1 à 2%. De la sorte, à la fin de cette phase de croisière 32, le réservoir contient, outre du carburant, une phase gazeuse particulièrement appauvrie en oxygène.

Puis, une fois la phase de descente 34 entamée, la teneur en gaz inerte, de l'air injecté dans le réservoir 12, est portée à une valeur T₂, sensiblement inférieure à celle T₁ correspondant à la phase stationnaire 32. Ceci signifie, en d'autres termes, que la teneur en oxygène de l'air injecté dans le réservoir, durant cette descente 34, est sensiblement supérieure à celle de l'air injecté pendant la phase de croisière 32.

Ainsi, il est envisageable d'injecter un air, dont la teneur en oxygène est voisine de 12%, soit une valeur supérieure à celle théoriquement requise afin d'éviter toute explosion des vapeurs de carburant. Une telle possibilité est assurée par le fait que, durant la phase précédente de vol stationnaire 32, de l'air particulièrement appauvri en oxygène avait été injecté. De la sorte, le mélange résultant des injections pendant les phases 32 et 34 possède une teneur en oxygène inférieure ou égale à celle requise pour s'affranchir de tout risque d'explosion.

L'injection d'un air, dont la teneur en oxygène est d'environ 12%, est réalisée en admettant de l'air ambiant dans le réservoir, par la ligne 13. Ainsi, il est possible de diluer, au moyen de cet air ambiant, un air dont la teneur en oxygène est voisine de 9%, fourni par l'appareil 2.

Durant la phase stationnaire 32, le débit d'air injecté est sensiblement inférieur à celui admis dans le réservoir, durant la phase de descente 34. Ainsi, si l'on considère fixés les paramètres de fonctionnement de l'appareil 2, tels la pression, la température et l'altitude, le rapport entre le second débit, relatif à la descente, et le premier débit, relatif à la phase stationnaire, est compris entre 2,5 et 5.

En effet, durant la phase stationnaire 32, ce débit correspond sensiblement au remplacement du carburant consommé. En revanche, durant la descente 34, ce débit contribue, d'une part, à remplacer ce carburant consommé et, d'autre part, à faire accroître la masse de gaz présente dans le réservoir, de façon à compenser la hausse de la pression atmosphérique lors d'une telle descente.

Comme le montre cette figure 2, la teneur en gaz inerte de l'air injecté pendant la phase de montée 30, est voisine de celle T₁ correspondant à la phase stationnaire 32. Néanmoins, il est envisageable d'injecter pendant cette phase de montée 30, un air dont la teneur en gaz inerte sera supérieure à T₁.

L'invention n'est pas limitée aux exemples décrits et représentés.

Ainsi, il est possible d'injecter, pendant la phase de vol stationnaire 32, un air dont la teneur en gaz inerte varie légèrement en fonction des paramètres de vol, tout en possédant une valeur nettement supérieure à la valeur de sécurité.

Par ailleurs, il est envisageable d'arrêter l'injection d'air fortement enrichi, un peu avant la fin de la phase stationnaire, de manière à procéder à l'admission d'air plus faiblement enrichi. Il est également possible de continuer l'admission d'air fortement enrichi, au début de la phase de descente.

## Revendications

1. Procédé d'inertage d'un réservoir de carburant d'aéronef, dans lequel on produit un air enrichi en gaz inerte, à partir d'une source d'air comprimé interne audit aéronef, et on admet ledit air enrichi dans le réservoir contenant le carburant, dans lequel, durant au moins une phase de croisière d'un vol de l'aéronef, on produit une première fraction d'air possédant une première teneur (T₁) en gaz inerte supérieure à une teneur théorique de sécurité et on admet cette première fraction dans le réservoir (12) avec un premier débit, et, durant une phase de descente (34) dudit vol, on produit une seconde fraction d'air enrichi, possédant une seconde teneur (T₂) en gaz inerte sensiblement inférieure à ladite première teneur (T₁), et on admet dans le réservoir, à un second débit substantiellement supérieur audit premier débit la seconde fraction et de l'air ambiant, dans un mélange présentant une teneur en gaz inerte inférieure à ladite teneur théorique.

2. Procédé selon la revendication 1, **caractérisé en ce que** la deuxième teneur (T₂) est d'environ 88%.

3. Procédé selon la revendication 1 ou la revendication 2, **caractérisé en ce que** le rapport entre le second débit et le premier débit est compris entre 2,5 et 5.

4. Procédé selon l'une des revendications 1 à 3, **caractérisé en ce qu'**on régule la teneur en gaz inerte de l'air enrichi en fonction d'un signal (16) correspondant à la phase du vol de l'aéronef.

5. Procédé selon l'une des revendications précédentes, **caractérisé en ce qu'**on admet dans le réservoir ladite première fraction d'air enrichi, également durant une phase de montée (30) du vol de l'aéronef.

## Patentansprüche

1. Verfahren zur Inertisierung eines Flugzeugbrennstofftanks, wobei aus einer Druckluftquelle innerhalb des Flugzeugs mit Inertgas angereicherte Luft erzeugt wird und die angereicherte Luft dem den Brennstoff enthaltenden Tank zugeführt wird, wobei während mindestens einer Flugmarschphase eines Flugzeugs ein erster Luftanteil erzeugt wird, der einen ersten Gehalt (T₁) an Inertgas besitzt, der größer ist als ein theoretischer Sicherheitsgehalt, und dieser erste Anteil mit einem ersten Durchsatz dem Tank (12) zugeführt wird, und während einer Flugabstiegsphase (34) ein zweiter Anteil an angereicherter Luft erzeugt wird, der einen zweiten Gehalt (T₂) an Inertgas besitzt, der wesentlich geringer ist als der erste Gehalt (T₁), und der zweite Anteil sowie Umluft mit einem zweiten Durchsatz, der wesentlich größer als der erste Durchsatz ist, in einer Mischung, die einen Gehalt an Inertgas aufweist, der geringer als der theoretische Gehalt ist, dem Tank zugeführt werden.

2. Verfahren nach Anspruch 1, **dadurch gekennzeichnet, dass** der zweite Gehalt (T2) ungefähr 88 % beträgt.

3. Verfahren nach Anspruch 1 oder 2, **dadurch gekennzeichnet, dass** das Verhältnis zwischen dem zweiten Durchsatz und dem ersten Durchsatz zwischen 2,5 und 5 liegt.

4. Verfahren nach einem der Ansprüche 1 bis 3, **dadurch gekennzeichnet, dass** der Gehalt an Inertgas der angereicherten Luft nach einem Signal (16), das der Flugphase des Flugzeugs entspricht, reguliert wird.

5. Verfahren nach einem der vorhergehenden Ansprüche, **dadurch gekennzeichnet, dass** der erste Anteil an angereicherter Luft auch während einer Fluganstiegsphase (30) des Flugzeugs dem Tank zugeführt wird.

## Claims

1. Method for inerting an aircraft fuel tank, in which air enriched with inert gas is produced from a source of compressed air internal to the said aircraft, and the said enriched air is let into the tank containing the fuel, in which, during at least one phase of cruising flight in the flight of the aircraft, a first fraction of air having a first content (T₁) of inert gas higher than a theoretical safety content is produced and this first fraction is let into the tank (12) at a first flow rate and, during a descent phase (34) of the said flight, a second fraction of enriched air, having a second inert gas content (T₂) markedly lower than the said first content (T₁) is produced and the second fraction and ambient air in a mixture having an inert gas content lower than the said theoretical content are let into the tank at a second flow rate significantly higher than the said first flow rate.

2. Method according to Claim 1, **characterized in that** the second content (T₂) is about 88%.

3. Method according to Claim 1 or Claim 2, **characterized in that** the ratio between the second flow rate and the first flow rate is between 2.5 and 5 inclusive.

4. Method according to one of Claims 1 to 3, **characterized in that** the inert gas content of the enriched air is regulated as a function of a signal (16) corresponding to the phase of flight of the aircraft.

5. Method according to one of the preceding claims, **characterized in that** the said first fraction of enriched air is also let into the tank when the aircraft is in a climbing phase (30) of its flight.
